# FASCICULE DE BREVET EUROPEEN

(11) **EP 1 596 449 B1**
(45) Date de publication et mention de la délivrance du brevet: **15.05.2019**
(21) Numéro de dépôt: 04290955.6
(22) Date de dépôt: 09.04.2004
(51) Int. Cl.: H01M 2/26

(54) **Raccordement électrique à un faisceau de connexion pour électrodes**
Elektrische Verbindung zu einem Bündel von Elektroden-Anschlüssen
Electrical connection to a bundle of connectors for electrodes

(30) Priorité: 11.04.2003 FR 0304528
(43) Date de publication de la demande: 16.11.2005
(73) Titulaire: SAFT, SA, 93170 Bagnolet (FR)
(72) Inventeur: Ligeois, Dominique, 33450 St Loubes (FR); Lacoste, Philippe, 86060 Poitiers Cedex 9 (FR); Fargeas, Franck, 86060 Poitiers Cedex 9 (FR)
(74) Mandataire: Hirsch & Associés

(56) Documents cités:
- EP-A- 0 955 682
- EP-A- 1 102 337
- US-A- 3 761 314

## Description

La présente invention se rapporte à un système de raccordement électrique entre une connexion reliée électriquement à une sortie de courant et un faisceau électrochimique selon la revendication 1. Elle s'étend en outre au procédé de réalisation de ce raccordement, selon la revendication 18.

Un générateur électrochimique comprend un faisceau électrochimique comportant une alternance d'électrodes positives et négatives encadrant un séparateur imprégné d'électrolyte. Chaque électrode est le plus souvent composée d'un collecteur de courant métallique supportant sur au moins une de ses faces la matière électrochimiquement active. L'électrode est connectée électriquement à une sortie de courant qui assure la continuité électrique entre l'électrode et l'application extérieure à laquelle le générateur est associé. Cette sortie de courant peut être le conteneur du générateur ou une borne de sortie de courant.

Il existe plusieurs façons de raccorder électriquement une électrode à une borne de sortie de courant. L'une de ces façons est l'utilisation d'une connexion plane qui est appliquée sur les collecteurs juxtaposés des électrodes d'une même polarité.

Selon le document EP-0 029 925, le raccordement électrique s'effectue par l'intermédiaire d'un disque plein disposé puis soudé sur la tranche de l'enroulement des électrodes spiralées.

Par exemple le document US-4,009,053 décrit un générateur à électrolyte alcalin et à électrodes spiralées. Il montre une connexion plane circulaire portant des fentes radiales ayant la forme de crevés, dont les bords rabattus servent à établir le contact électrique avec le collecteur de l'électrode spiralée.

Dans les générateurs électrochimiques à électrolyte aqueux, comme les générateurs Ni-Cd, le support d'électrode est un feuillard en acier nickelé d'environ 0,2 mm d'épaisseur. Il n'y a pas de difficultés particulières à souder directement sur la tranche du feuillard une pièce reliée électriquement à la borne. En revanche, dans les générateurs électrochimiques à électrolyte organique concernés par l'invention, comme les générateurs au lithium ou les supercondensateurs, le support de l'électrode positive est généralement un feuillard d'aluminium mince d'épaisseur inférieure à 50µm et celui de l'électrode négative est un feuillard de cuivre mince d'épaisseur inférieure à 50µm. De telles minceurs n'offrent pas la résistance mécanique nécessaire à la réalisation de soudures fiables sur la tranche des électrodes.

On connaît du document EP 1 102 337 un générateur électrochimique comprenant une alternance d'électrodes positives et négatives spiralées constituant un faisceau électrochimique. Chaque électrode comporte un feuillard métallique servant de collecteur de courant. Les feuillards d'une même polarité font respectivement saillie vers l'extérieur du faisceau pour former une base plane sur laquelle est jointe une connexion plane.

Les portions des feuillards faisant saillies de part et d'autre du faisceau électrochimique ne forment cependant pas un socle plan continu. Les feuillards sont pliés à 90° par un outil de presse. Un tel procédé ne permet pas de réaliser une barrière métallique avec des feuillards pliés formant un socle plan et continu.

En ce qui concerne des techniques développées dans le cadre d'électrodes planes (non spiralées), le document FR-2 748 606 propose par exemple un procédé de connexion par foisonnement. Les rives des électrodes sont rassemblées en deux demi-faisceaux raccordés horizontalement à une borne de sortie de courant.

La présente invention a pour but d'éliminer les inconvénients de l'art antérieur et, en particulier, de proposer une solution, qui soit facilement industrialisable.

Plus précisément l'invention a pour but de proposer un système de raccordement électrique par soudure d'une connexion plane sur la tranche d'électrode d'une même polarité d'une manière plus simple que les systèmes décrits dans l'art antérieur.

L'objet de la présente invention est un système de raccordement électrique d'une connexion plane aux électrodes d'une même polarité d'un faisceau électrochimique comprenant une alternance d'au moins une électrode positive et d'au moins une électrode négative encadrant un séparateur, chaque électrode comprenant un feuillard métallique d'épaisseur inférieure à 50µm, servant de collecteur de courant, dont au moins une face est revêtue de matière électrochimiquement active, les feuillards des électrodes de chaque polarité comprenant une bande latérale non revêtue émergeant respectivement des extrémités opposées dudit faisceau, caractérisé en ce que les bandes latérales des feuillards d'une même polarité sont repliées dans une direction sensiblement perpendiculaire à leur direction initiale d'une hauteur au moins égale à la distance les séparant des feuillards voisins de la même polarité de manière à former un socle sensiblement plan et continu sur lequel est soudée ladite connexion plane.

Selon un mode de réalisation préféré, les bandes latérales sont repliées d'une hauteur comprise entre 3 et 4mm. Ainsi l'espace se trouvant entre deux feuillards successifs se trouve recouvert et obturé par la partie pliée, empêchant toute intrusion de matière à l'intérieur du faisceau électrochimique. L'invention a donc comme avantage de réduire considérablement les risques de courts-circuits entre les électrodes de polarité opposée.

Afin de leur permettre de se plier de la manière souhaitée, les feuillards ne doivent pas dépasser 50µm d'épaisseur. Cependant pour des raisons de tenue mécanique et de résistance à la manipulation, les feuillards ont de préférence une épaisseur minimum comprise entre 10µm et 15µm ; un minimum de 10µm pour un feuillard en cuivre et un minimum de 15µm pour un feuillard en aluminium.

Selon une première variante, la connexion est reliée électriquement à une sortie de courant.

Selon une deuxième variante, la connexion constitue une sortie de courant.

Selon un mode de réalisation particulier, le faisceau électrochimique comprend une électrode positive et une électrode négative, encadrant un séparateur, qui sont spiralées pour former un bobineau. Dans ce cas la partie non revêtue du feuillard positif se projettera hors de l'une des sections circulaire et celle du feuillard négatif de manière symétrique hors de l'autre section.

De préférence la bande latérale de l'électrode positive a une hauteur comprise entre 13mm et 17mm.

De préférence la bande latérale de l'électrode négative a une hauteur comprise entre 8mm et 12mm.

De préférence, la connexion plane est soudée à une distance d'au moins 3 mm d'une extrémité du séparateur du faisceau électrochimique
De préférence, les bandes latérales sont repliées en accordéon.

De préférence, la connexion plane est une lame ne recouvrant pas la totalité de la surface du socle plan formé par lesdites bandes latérales repliées.

La présente invention a aussi pour objet un générateur électrochimique comportant un système de raccordement électrique tel que décrit précédemment. Le générateur électrochimique selon l'invention peut comporter des électrodes planes ou des électrodes spiralées. Ce générateur peut aussi être un générateur au lithium, notamment un générateur rechargeable par exemple du type "Lithium-ion", ou un supercondensateur.

Dans le cas où le générateur électrochimique est du type Lithium-ion, il comporte une électrode négative dans laquelle la matière active est un matériau carboné susceptible d'insérer du lithium dans sa structure choisi notamment parmi le graphite, le coke, le noir de carbone et le carbone vitreux. Il comporte aussi une électrode positive dans laquelle la matière active est choisie parmi un oxyde de métaux de transition, un sulfure, un sulfate et leurs mélanges.

Dans le cas où le générateur considéré est supercondensateur, les électrodes ont comme matière active du charbon actif.

Selon une première variante, dans laquelle le générateur comprend des électrodes planes, la connexion plane est soudée selon au moins une ligne de soudure perpendiculaire au plan des électrodes.

Selon une deuxième variante, dans laquelle le générateur comprend des électrodes spiralées, la connexion plane est soudée selon au moins une ligne de soudure tangente à l'axe de spiralage des électrodes.

La présente invention à encore pour objet un procédé de raccordement électrique d'une connexion plane aux électrodes d'une même polarité d'un faisceau électrochimique en vue d'obtenir le système précédemment décrit, comprenant les étapes suivantes :
- on réunit au moins une électrode positive, au moins une électrode négative et au moins un séparateur pour former un faisceau électrochimique de manière à laisser dépasser une bonde latérale des électrodes de polarité opposées respectivement aux extrémités opposées du faisceau,
- on exerce une pression sur la tranche des bandes latérales des électrodes d'une même polarité afin de les replier,
- on soude une connexion plane sur le socle constitué par les bandes latérales repliées.

Selon une première variante de réalisation, la connexion plane est soudée au laser avec apport de matière sur les bandes repliées.

Selon une deuxième variante de réalisation, ladite connexion plane est soudé au laser par transparence sur les bandes repliées.

Selon un mode de réalisation, le pliage des bandes latérales est réalisé par tassement répétitif desdites bandes par petites passes successives d'un marteau sur une même surface.

De préférence, la surface de tassement d'une passe est comprise entre 20 et 50 mm².

La présente invention à encore pour objet un procédé de fabrication d'un générateur électrochimique comprenant le système de raccordement électrique d'une connexion plane aux électrodes d'une même polarité d'un faisceau électrochimique précédemment décrit.

La présente invention a comme avantage de réduire de manière importante la durée de l'étape de raccordement de la connexion.

L'invention sera mieux comprise et d'autres avantages et particularités apparaîtront à la lecture de la description qui va suivre, donnée à titre illustratif, mais nullement limitatif, accompagnée des dessins annexés parmi lesquels :
- la figure 1 montre une électrode,
- la figure 2 représente schématiquement en coupe une partie du faisceau électrochimique,
- la figure 3 montre une vue en coupe d'un générateur au cours de l'opération de pliage des bandes latérales non revêtues,
- la figure 4 montre en coupe un faisceau électrochimique après pliage des bandes non revêtues,
- la figure 5 est une vue de dessus du faisceau muni de sa connexion,
- la figure 6 représente en coupe schématique un générateur électrochimique selon l'invention.

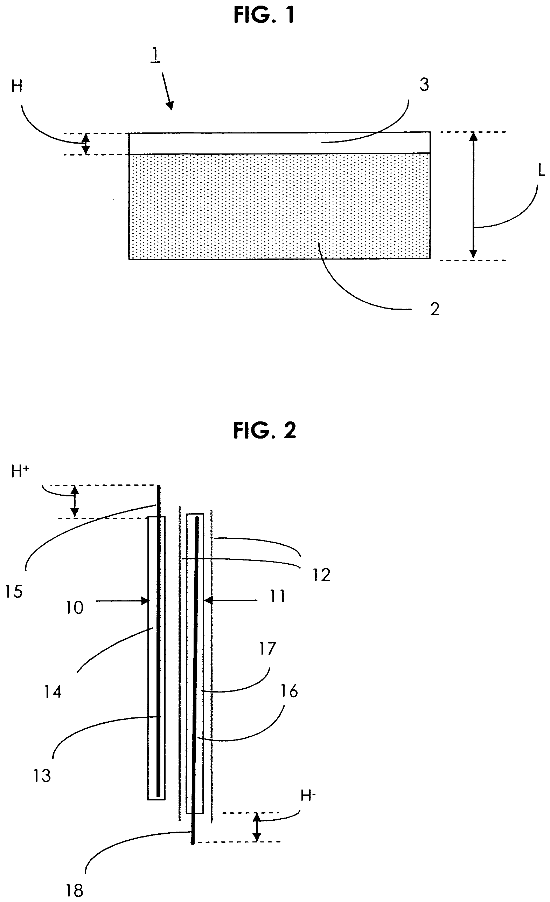

La figure 1 représente l'extrémité d'une électrode 1 de largeur totale L sur laquelle on distingue la couche 2 de matière active occupant la plus grande partie de la surface de l'électrode et une bande latérale 3 de hauteur H constituée du seul feuillard, qui n'a pas été recouvert de matière active.

Des électrodes du type représenté sur la figure 1 et portant respectivement des matières actives positive et négative sont assemblées en faisceau. Une partie de faisceau électrochimique, comprenant une électrode positive 10 et une électrode négative 11 entre lesquelles sont intercalés des séparateurs 12, est représentée sur la figure 2. L'électrode positive 10 comporte un feuillard 13 recouvert d'une couche 14 contenant la matière active positive. A l'une des extrémités du feuillard 13 a été réservé une bande latérale 15 qui ne porte pas de matière active. Cette bande 15 dépasse du faisceau et a une hauteur H⁺ comprise entre 13mm et 17mm. L'électrode négative 11 comporte un feuillard 16 recouvert d'une couche 17 contenant la matière active négative. A l'une des extrémités du feuillard 16 a été réservée une bande latérale 18 qui ne porte pas de matière active. Cette bande 18 se projette à l'extrémité du faisceau opposée à celle où se situe la bande 15. Elle a une hauteur H⁻ comprise entre 8mm et 12mm. Les séparateurs 12 débordent légèrement de la partie des électrodes revêtue de matière active de manière à éviter les courts-circuits.

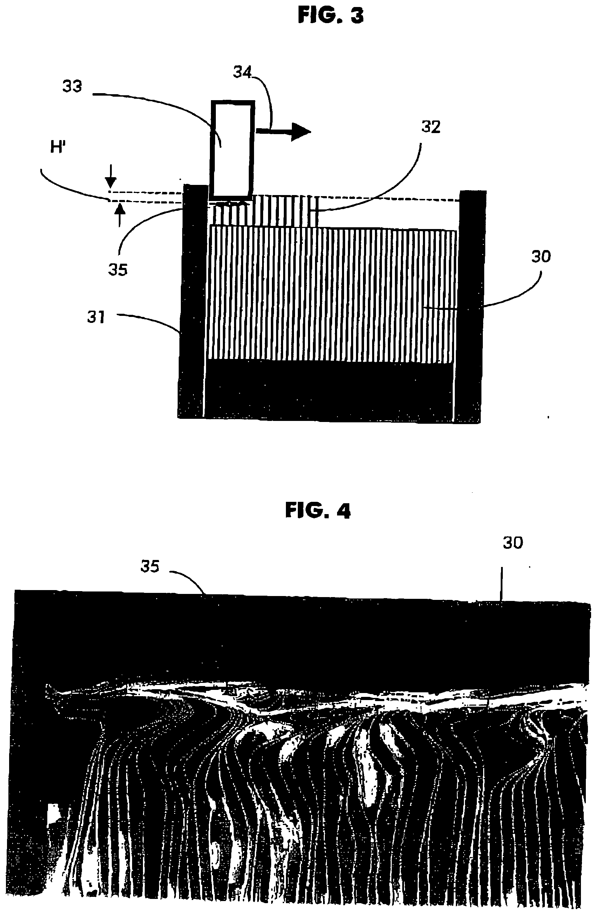

Le faisceau électrochimique 30 une fois constitué est maintenu dans un outil de centrage 31, comme le montre la figure 3, et les bandes latérales dépassantes non revêtues 32 sont recourbées à l'aide d'un outil 33, comme par exemple un marteau d'un diamètre de 15 à 20mm. Le marteau 33 peut être avantageusement constitué d'une pluralité de petits marteaux, de 5 à 8 mm de diamètre, disposés en série.

Le marteau 33 se déplace de haut en bas avec une course de 3mm, puis se déplace vers le centre du faisceau dans le sens indiqué par la flèche 34 après chaque tour de rotation de celui-ci. On obtient un ensemble de feuillards pliés 35 sur une hauteur H' d'environ 3 à 4mm.

Les hauteurs précitées H⁺ et H⁻ des bandes latérales 15, 18 sont telles que les feuillards non pliés dépassent de 6 à 7 mm des extrémités des séparateurs 12. Ainsi, lors de l'étape ultérieure de pliage des bandes latérales sur une hauteur H', les extrémités des séparateurs sont encore éloignées du socle des feuillards pliés 35 d'au moins 3 mm. Une telle distance entre les feuillards pliés et les extrémités des séparateurs permet d'éviter tout risque de brûlure des séparateurs lors de l'étape ultérieure de soudure d'une connexion plane sur les feuillards pliés.

Selon un mode de réalisation préféré, le pliage des bondes latérales non revêtue 32 des feuillards 15 est obtenu par tassement répétitif desdites bandes par petites passes successives du marteau 33 sur une même surface d'environ 20 à 50 mm², le marteau 33 effectuant un mouvement de haut en bas jusqu'à obtenir une surface plane. Les bandes latérales des feuillards d'une même polarité sont ainsi repliées en une sorte « d'accordéon » pour former un socle plan continu sensiblement perpendiculaire à la direction initiale des feuillards,

La figure 4 montre l'aspect du faisceau d'électrodes 30 après cette opération sur laquelle on voit les bandes latérales pliées 35 formant un socle plan et continu.

Le socle 35 ainsi formé constitue une barrière métallique permettant la soudure d'une connexion plane au laser.

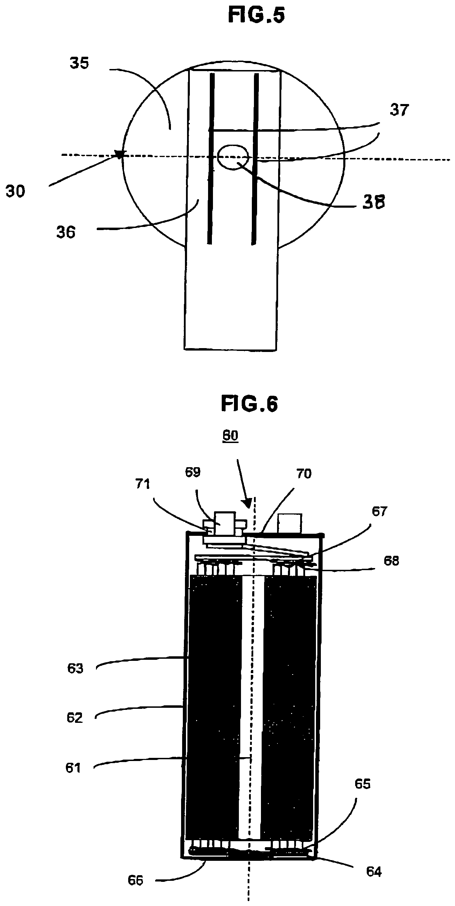

Ce socle 35 reçoit une connexion 36 qui est soudée au laser, avec apport de matière ou par transparence, de manière à former deux cordons 37 parallèles visibles sur la figure 5.

Cette soudure au laser est réalisée sans percer la plaque de connexion 36. Lors d'une soudure par transparence, de la matière du socle 35 est fondue par le faisceau laser qui échauffe les bandes latérales des feuillards repliées. Cette matière fondue s'étale sur le socle 35 pour constituer la soudure. Un tel procédé de soudage permet d'éviter tout risque de projection de soudure à l'intérieur du faisceau.

La connexion plane 36 peut être une lame ne couvrant pas la totalité de la surface du socle plan 35 formé par les bandes latérales des feuillards repliées. Ainsi, les dégagements gazeux du faisceau électrochimique peuvent être directement évacués par les extrémités du faisceau. En effet, le socle plan continu formé par les feuillards repliés n'est pas étanche au gaz.

De plus, la connexion plane 36 peut également être percée d'un trou 38 dans l'axe du faisceau d'électrode 30 afin de permettre un bon dégagement gazeux par cet orifice.

La figure 6 représente un générateur électrochimique 60 de forme cylindrique d'axe creux 61 comportant un conteneur 62 en aluminium dans lequel a été introduit un faisceau 63 comprenant une électrode positive et une électrode négative spiralées. La connexion positive 64 plane en aluminium est d'une part soudée par soudure au laser sur les bandes 65 non revêtues du feuillard en aluminium de l'électrode négative, préalablement rabattues de la manière décrite précédemment. La connexion positive 64 est d'autre part soudée sur le fond 66 du conteneur 62 par soudure laser ou par soudure électrique, les deux types de soudure étant étanches. La connexion négative 67 plane, en cuivre ou en cuivre nickelé, est soudée de la même manière sur les bandes 68 non revêtues du feuillard en cuivre de l'électrode positive, préalablement rabattues de la manière décrite précédemment. La connexion négative 67 est d'autre part soudée sur une borne 69 de sortie de courant par soudure au laser ou soudure par ultrasons. La borne 69 de polarité négative est fixée sur un couvercle 70 qui est soudé ou serti sur le conteneur 62. La borne 69 est isolée électriquement du couvercle 70 par un joint isolant 71.

Dans le cas d'un générateur électrochimique comportant des électrodes spiralées, la connexion plane est soudée selon au moins une ligne de soudure tangente à l'axe de spiralage des électrodes, au plus proche de cet axe de spiralage afin de couvrir un maximum de feuillards métalliques.

Par ailleurs, dans le cas d'un générateur électrochimique comportant des électrodes planes, la connexion plane est soudée selon au moins une ligne de soudure perpendiculaire au plan des électrodes.

## Revendications

1. Système de raccordement électrique d'une connexion plane (36) aux électrodes d'une même polarité d'un faisceau électrochimique (30, 63) comprenant une alternance d'au moins une électrode positive (10) et d'au moins une électrode négative (11) encadrant un séparateur (12), chaque électrode comprenant un feuillard métallique (13, 16) d'épaisseur inférieure à 50µm, servant de collecteur de courant, dont au moins une face est revêtue d'une pâte contenant la matière électrochimiquement active (14, 17), les feuillards des électrodes de chaque polarité comprenant une bande latérale non revêtue (3, 15, 18, 32, 65, 68) émergeant respectivement des extrémités opposées dudit faisceau, **caractérisé en ce que** les bandes latérales des feuillards d'une même polarité sont repliées en accordéon dans une direction sensiblement perpendiculaire à leur direction initiale d'une hauteur au moins égale à la distance les séparant des feuillards voisins de la même polarité formant ainsi un socle (35) sensiblement plan et continu sur lequel est soudée ladite connexion plane.

2. Système selon la revendication 1, dans lequel lesdites bandes latérales sont repliées d'une hauteur comprise entre 3 et 4mm.

3. Système selon l'une des revendications 1 et 2, dans lequel lesdits feuillards ont une épaisseur minimum comprise entre 10µm et 15µm.

4. Système selon l'une des revendications 1 à 3, dans lequel ladite connexion plane est soudée au laser avec apport de matière sur lesdits feuillards repliés.

5. Système selon l'une des revendications 1 à 3, dans lequel ladite connexion plane est soudée au laser par transparence sur lesdits feuillards repliés.

6. Système selon l'une des revendications 1 à 5, dans lequel ladite connexion est reliée électriquement à une sortie de courant (69).

7. Système selon l'une des revendications 1 à 5, dans lequel ladite connexion constitue une sortie de courant (64).

8. Système selon l'une des revendications précédentes, dans lequel ledit faisceau électrochimique comprend une électrode positive et une électrode négative, encadrant un séparateur, qui sont spiralées pour former un bobineau.

9. Système selon l'une des revendications précédentes, dans lequel ladite bande latérale de l'électrode positive a une hauteur comprise entre 13mm et 17mm.

10. Système selon l'une des revendications précédentes, dans lequel ladite bande latérale de l'électrode négative a une hauteur comprise entre 8mm et 12mm.

11. Système selon l'une des revendications précédentes, dans lequel ladite connexion plane est soudée à une distance d'au moins 3 mm d'une extrémité du séparateur du faisceau électrochimique.

12. Système selon l'une des revendications précédentes, dans lequel ladite connexion plane est une lame (36) ne recouvrant pas la totalité de la surface du socle plan formé par lesdites bandes latérales repliées.

13. Générateur électrochimique (60) comportant un système de raccordement électrique selon l'une des revendications 1 à 12, comportant des électrodes planes.

14. Générateur selon la revendication 13, dans lequel ladite connexion plane est soudée selon au moins une ligne de soudure perpendiculaire au plan des électrodes.

15. Générateur électrochimique comportant un système de raccordement électrique selon l'une des revendications 1 à 12, comportant des électrodes spiralées.

16. Générateur selon la revendication 15, dans lequel ladite connexion plane est soudée selon au moins une ligne de soudure tangente (37) à l'axe de spiralage des électrodes.

17. Générateur selon l'une des revendications 13 à 16, choisi parmi les générateurs au lithium et les supercondensateurs.

18. Procédé de raccordement électrique d'une connexion plane (36) aux électrodes d'une même polarité d'un faisceau électrochimique (30, 63) comprenant une alternance d'au moins une électrode positive (10) et d'au moins une électrode négative (11) encadrant un séparateur (12), chaque électrode comprenant un feuillard métallique (13, 16) d'épaisseur inférieure à 50µm, servant de collecteur de courant, dont au moins une face est revêtue d'une pâte contenant la matière électrochimiquement active (14, 17), les feuillards des électrodes de chaque polarité comprenant une bande latérale non revêtue (3, 15, 18, 32, 65, 68) émergeant respectivement des extrémités opposées dudit faisceau, le procédé comprenant les étapes suivantes :
- on réunit au moins une électrode positive, au moins une électrode négative et au moins un séparateur pour former un faisceau électrochimique de manière à laisser dépasser la bande latérale (3, 15, 18, 32, 65, 68) desdites électrodes de polarité opposées respectivement aux extrémités opposées dudit faisceau,
- on exerce une pression sur la tranche desdites bandes latérales des électrodes d'une même polarité afin de les replier en accordéon, les bandes latérales étant repliées dans une direction sensiblement perpendiculaire à leur direction initiale d'une hauteur au moins égale à la distance les séparant des feuillards voisins de la même polarité, formant ainsi un socle sensiblement plan et continu,
- on soude une connexion plane sur le socle (35) constitué par lesdites bande latérales repliées.

19. Procédé selon la revendication 18, dans lequel ladite connexion plane est soudée au laser avec apport de matière sur lesdites bandes repliées.

20. Procédé selon la revendication 18, dans lequel ladite connexion plane est soudée au laser par transparence sur lesdites bandes repliées.

21. Procédé selon l'une des revendications 18 à 20, dans lequel le pliage des bandes latérales est réalisé par tassement répétitif desdites bandes par petites passes successives d'un marteau (33) sur une même surface.

22. Procédé selon la revendication 21, dans lequel la surface de tassement d'une passe est comprise entre 20 et 50 mm².

23. Procédé de fabrication d'un générateur électrochimique comprenant le système de raccordement électrique d'une connexion plane aux électrodes d'une même polarité d'un faisceau électrochimique selon l'une des revendications 1 à 12.

## Patentansprüche

1. System zur elektrischen Verbindung eines flachen Anschlusses (36) zu den Elektroden einer selben Polarität eines elektrochemischen Bündels (30, 63), umfassend eine Wechselfolge von mindestens einer positiven Elektrode (10) und mindestens einer negativen Elektrode (11), die einen Separator (12) umrahmen, wobei jede Elektrode ein Metallband (13, 16) mit einer Dicke unter 50 µm umfasst, das als Stromkollektor dient, von dem mindestens eine Seite mit einer Paste überzogen ist, die das elektrochemisch aktive Material (14, 17) enthält, wobei die Bänder der Elektroden jeder Polarität einen nicht überzogenen Seitenstreifen (3, 15, 18, 32, 65, 68) umfassen, der jeweils aus den gegenüberliegenden Enden des Bündels herausragt, **dadurch gekennzeichnet, dass** die Seitenstreifen der Bänder einer selben Polarität akkordeonartig in eine Richtung im Wesentlichen senkrecht auf ihre ursprüngliche Richtung in einer Höhe mindestens gleich dem Abstand zwischen ihnen und den benachbarten Bändern derselben Polarität gefaltet sind, wodurch ein im Wesentlichen ebener und kontinuierlicher Sockel (35) gebildet wird, auf den der flache Anschluss geschweißt ist.

2. System nach Anspruch 1, bei dem die Seitenstreifen in einer Höhe zwischen 3 und 4 mm gefaltet sind.

3. System nach einem der Ansprüche 1 und 2, bei dem die Bänder eine Mindestdicke zwischen 10 µm und 15 µm haben.

4. System nach einem der Ansprüche 1 bis 3, bei dem der flache Anschluss unter Zusatz von Material auf die gefalteten Bänder mit dem Laser geschweißt wird.

5. System nach einem der Ansprüche 1 bis 3, bei dem der flache Anschluss mit dem Laser durch Transparenz auf die gefalteten Bänder geschweißt wird.

6. System nach einem der Ansprüche 1 bis 5, bei dem der Anschluss elektrisch mit einem Stromausgang (69) verbunden ist.

7. System nach einem der Ansprüche 1 bis 5, bei dem der Anschluss einen Stromausgang (64) darstellt.

8. System nach einem der vorhergehenden Ansprüche, bei dem das elektrochemische Bündel eine positive Elektrode und eine negative Elektrode, einen Separator umrahmen, umfasst, welche Elektrode spiralförmig sind, um eine Spule zu bilden.

9. System nach einem der vorhergehenden Ansprüche, bei dem der Seitenstreifen der positiven Elektrode eine Höhe zwischen 13 mm und 17 mm hat.

10. System nach einem der vorhergehenden Ansprüche, bei dem der Seitenstreifen der negativen Elektrode eine Höhe zwischen 8 mm und 12 mm hat.

11. System nach einem der vorhergehenden Ansprüche, bei dem der flache Anschluss in einem Abstand von mindestens 3 mm zu einem Ende des Separators des elektrochemischen Bündels geschweißt wird.

12. System nach einem der vorhergehenden Ansprüche, bei dem der flache Anschluss eine Lamelle (36) ist, die nicht die gesamte Oberfläche der ebenen Basis, die von den gefalteten Seitenstreifen gebildet ist, bedeckt.

13. Elektrochemischer Generator (60), umfassend ein elektrisches Verbindungssystem nach einem der Ansprüche 1 bis 12, umfassend flache Elektroden.

14. Generator nach Anspruch 13, bei dem der flache Anschluss entlang mindestens einer Schweißlinie senkrecht auf die Ebene der Elektroden geschweißt wird.

15. Elektrochemischer Generator, umfassend ein elektrisches Verbindungssystem nach einem der Ansprüche 1 bis 12, umfassend spiralförmige Elektroden.

16. Generator nach Anspruch 15, bei dem der flache Anschluss entlang mindestens einer Schweißlinie (37), die die Spiralachse der Elektroden tangiert, geschweißt wird.

17. Generator nach einem der Ansprüche 13 bis 16, der unter den Lithium-Generatoren und den Superkondensatoren ausgewählt ist.

18. Verfahren zur elektrischen Verbindung eines flachen Anschlusses (36) zu den Elektroden einer selben Polarität eines elektrochemischen Bündels (30, 63), umfassend eine Wechselfolge von mindestens einer positiven Elektrode (10) und mindestens einer negativen Elektrode (11), die einen Separator (12) umrahmen, wobei jede Elektrode ein Metallband (13, 16) mit einer Dicke unter 50 µm umfasst, das als Stromkollektor dient, von dem mindestens eine Seite mit einer Paste überzogen ist, die das elektrochemisch aktive Material (14, 17) enthält, wobei die Bänder der Elektroden jeder Polarität einen nicht überzogenen Seitenstreifen (3, 15, 18, 32, 65, 68) umfassen, der jeweils aus den gegenüberliegenden Enden des Bündels herausragt, wobei das Verfahren die folgenden Schritte umfasst:
- Verbinden mindestens einer positiven Elektrode, mindestens einer negativen Elektrode und mindestens eines Separators, um ein elektrochemisches Bündel zu bilden, um den Seitenstreifen (3, 15, 18, 32, 65, 68) der Elektroden mit entgegengesetzter Polarität jeweils an den gegenüberliegenden Enden des Bündels überstehen zu lassen,
- Ausüben eines Drucks auf den Abschnitt der Seitenstreifen der Elektroden einer selben Polarität, um sie akkordeonartig zu falten, wobei die Seitenstreifen in eine Richtung im Wesentlichen senkrecht auf ihre ursprüngliche Richtung in einer Höhe mindestens gleich dem Abstand zwischen ihnen und den benachbarten Bändern derselben Polarität gefaltet sind, wodurch ein im Wesentlichen ebener und kontinuierlicher Sockel gebildet wird,
- Schweißen eines flachen Anschlusses auf die Basis (35), die von den gefalteten Seitenstreifen gebildet ist.

19. Verfahren nach Anspruch 18, bei dem der flache Anschluss unter Zusatz von Material auf die gefalteten Bänder mit dem Laser geschweißt wird.

20. Verfahren nach Anspruch 18, bei dem der flache Anschluss mit dem Laser durch Transparenz auf die gefalteten Bänder geschweißt wird.

21. Verfahren nach einem der Ansprüche 18 bis 20, bei dem das Falten der Seitenstreifen durch wiederholtes Stampfen der Streifen durch kleine aufeinanderfolgende Schläge eines Hammers (33) auf eine selbe Fläche erfolgt.

22. Verfahren nach Anspruch 21, bei dem die Stampffläche eines Schlags zwischen 20 und 50 mm² beträgt.

23. Verfahren zur Herstellung eines elektrochemischen Generators, umfassend das System zur elektrischen Verbindung eines flachen Anschlusses zu den Elektroden einer selben Polarität eines elektrochemischen Bündels nach einem der Ansprüche 1 bis 12.

## Claims

1. System for electric coupling of a plane connection (36) to the electrodes of a same polarity of an electrochemical bundle (30, 63) comprising an alternating sequence of at least one positive electrode (10) and at least one negative electrode (11) framing a separator (12), each electrode comprising a metal strip (13, 16) less than 50 µm thick, serving as current collector, at least one surface of which is coated with a paste containing the electrochemically active material (14, 17), the strips of the electrodes of each polarity comprising a non-coated lateral band (3, 15, 18, 32, 65, 68) emerging respectively from the opposite ends of said bundle, **characterized in that** the lateral bands of the strips of a same polarity are folded in a concertina manner in a direction approximately perpendicular to their initial direction at a height at least equal to the distance separating them from the adjacent strips of the same polarity in order to form an approximately plane (35) and continuous base to which said plane connection is welded.

2. System according to claim 1, in which said lateral bands are folded at a height comprised between 3 and 4 mm.

3. System according to one of claims 1 and 2, in which said strips have a minimum thickness comprised between 10 µm and 15 µm.

4. System according to one of claims 1 to 3, in which said plane connection is laser welded with addition of material to said folded strips.

5. System according to one of claims 1 to 3, in which said plane connection is transparency laser-welded to said folded strips.

6. System according to one of claims 1 to 5, in which said connection is electrically connected to a current output (69).

7. System according to one of claims 1 to 5, in which said connection constitutes a current output (64).

8. System according to one of the preceding claims, in which said bundle comprises a positive electrode and a negative electrode, framing a separator, which are spirally wound in order to form a coil.

9. System according to one of the preceding claims, in which said lateral band of the positive electrode has a height comprised between 13 mm and 17 mm.

10. System according to one of the preceding claims, in which said lateral band of the negative electrode has a height comprised between 8 mm and 12 mm.

11. System according to one of the preceding claims, in which said plane connection is welded at a distance of at least 3 mm from one end of the separator of the electrochemical bundle.

12. System according to one of the preceding claims, in which said plane connection is a blade (36) not covering all the surface of the plane base formed by said folded lateral bands.

13. Electrochemical generator (60) comprising a system for electric coupling according to one of claims 1 to 12, comprising plane electrodes.

14. Generator according to claim 13, in which said plane connection is welded according to at least one weld line perpendicular to the plane of the electrodes.

15. Generator comprising a system for electric coupling according to one of claims 1 to 12, comprising spirally wound electrodes.

16. Generator according to claim 15, in which said plane connection is welded according to at least one weld line tangent (37) to the winding axis of the electrodes.

17. Generator according to one of claims 13 to 16, chosen from lithium generators and supercapacitors.

18. Method of electric coupling of a plane connection (36) to the electrodes of the same polarity of an electrochemical bundle (30, 63) comprising an alternating sequence of at least one positive electrode (10) and at least one negative electrode (11) framing a separator (12), each electrode comprising a metal strip (13, 16) less than 50 µm thick, serving as current collector, at least one surface of which is coated with a paste containing the electrochemically active material (14, 17), the strips of the electrodes of each polarity comprising a non-coated lateral band (3, 15, 18, 32, 65, 68) emerging respectively from the opposite ends of said bundle, the method comprising the following steps:
- at least one positive electrode, at least one negative electrode and at least one separator are put together to form an electrochemical bundle in order to let a lateral band (3, 15, 18, 32, 65, 68) of said electrodes of opposite polarity respectively protrude from the opposite ends of said bundle,
- a pressure is exerted on the section of said lateral bands of the electrodes of a same polarity in order to fold them, the lateral bands being folded in a direction approximately perpendicular to their initial direction at a height at least equal to the distance separating them from the adjacent strips of the same polarity in order to form an approximately plane and continuous base,
- a plane connection is welded to the base (35) constituted by said folded lateral bands.

19. Method according to claim 18, in which said plane connection is laser welded with addition of material to said folded bands.

20. Method according to claim 18, in which said plane connection is transparency laser-welded to said folded bands.

21. Method according to one of claims 18 to 20, in which the folding of the lateral bands is carried out by repeated flattening of said bands by small successive passes of a hammer (33) over the same surface.

22. Method according to claim 21, in which the surface flattened by one pass is comprised between 20 and 50 mm².

23. Method of fabricating an electrochemical generator comprising the system for electric coupling of a plane connection to the electrodes of a same polarity of an electrochemical bundle according to one of claims 1 to 12.
